**Europäisches Patentamt**

**European Patent Office**

**Office européen des brevets**

(11) Veröffentlichungsnummer: **0 204 078**
**A2**

## (12) EUROPÄISCHE PATENTANMELDUNG

(21) Anmeldenummer: **86103056.7**

(22) Anmeldetag: **07.03.86**

(51) Int. Cl.4: **C08F 6/06** , **C08J 3/10** , **C08C 2/00**

(30) Priorität: **06.05.85 CH 1903/85**

(43) Veröffentlichungstag der Anmeldung:
**10.12.86 Patentblatt 86/50**

(84) Benannte Vertragsstaaten:
**CH DE FR GB IT LI**

(71) Anmelder: **GEBRÜDER SULZER AKTIENGESELLSCHAFT**
**Zürcherstrasse 9**
**CH-8401 Winterthur(CH)**

(72) Erfinder: **Altorfer, Alfred**
**Riedhaldenstrasse 13**
**CH-8427 Freienstein(CH)**

(74) Vertreter: **Dipl.-Ing. H. Marsch Dipl.-Ing. K. Sparing Dipl.-Phys.Dr. W.H. Röhl**
**Patentanwälte**
**Rethelstrasse 123**
**D-4000 Düsseldorf(DE)**

(54) **Verfahren zur Reinigung von chlorierten, aliphatischen Polymeren.**

(57) In einer Dampf/Flüssigkeits-Austauschkolonne - (1) wird die das chlorierte Polymerprodukt enthaltende Chlorierungs-Lösung einem Lösungsmittelaustausch unterworfen, bei dem das Chlorierungs-Lösungsmittel durch ein zweites Lösungsmittel ersetzt wird. Die Eingabe der zu reinigenden in der Chlorierungslösung gelösten Polymere erfolgt in den Kopf (3) der Kolonne (1).

Das neue Verfahren ist energiesparend und produktschonend, da es im kontinuierlichen Betrieb durchgeführt werden kann.

F I G. 1

EP 0 204 078 A2

## Verfahren zur Reinigung von chlorierten, aliphatischen Polymeren

Die Erfindung betrifft ein Verfahren zur Reinigung von chlorierten aliphatischen Polymeren von ihren Chlorierungs-Lösungsmitteln durch einen Lösungsmittelaustausch mit einem zweiten Lösungsmittel, das einen höheren Siedepunkt als das Chlorierungs-Lösungsmittel hat, wobei das zweite Lösungsmittel als Flüssigkeit oder Dampf in den Sumpf einer Kolonne eingespeist wird, aus dem darüberhinaus die Lösung der im zweiten Lösungsmittel gelösten chlorierten aliphatischen Polymeren abgezogen wird, während die Chlorierungs-Lösungsmittel und gegebenenfalls anderen Verunreinigungen am Kopf der Kolonne entfernt werden.

Bekanntlich werden aliphatische Polymere, wie z.B. Naturkautschuk, Polyisopren, Polybutadien, Polyethylen, Polypropylen und Copolymerisate chloriert, indem man die Polymere in einem chlorbeständigen Lösungsmittel -wie z.B. Tetrachlormethan ($CCl_4$), Chloroform, Trichlorethylen oder Tetrachlorethan -auflöst und in geeigneter Weise mit Chlor umsetzt.

Für die Anwendung von chlorierten Polymeren, z.B. für Anstriche, Druckfarben oder Klebstoffe, müssen die zum Teil sehr toxischen Chlorierungs-Lösungsmittel aus gesundheitlichen Gründen möglichst vollständig entfernt und durch andere Lösungsmittel ersetzt werden.

Bei dem eingangs beschriebenen bekannten Verfahren (FR-A-1.424.790) werden die Chlorierungslösung und ein zweites Lösungsmittel mit höhere Siedetemperatur als das Chlorierungs-Lösungsmittel gemischt und als einzelne Chargen in den Sumpf einer Trennkolonne gegeben; in dieser Kolonne werden das Chlorierungs-Lösungsmittel sowie Teile des zweiten Lösungsmittels solange fraktioniert abdestilliert, bis die zurückbleibende Lösung der chlorierten Polymeren im zweiten Lösungsmittel an Chlorierungs-Lösungsmittel im geforderten Umfang verarmt ist.

Dieses Verfahren vermeidet zwar die bekannte vorgängige Isolierung der chlorierten Polymeren;der energetische und der apparative Aufwand bleibt aber immer noch gross. Denn mindestens ein Teil der abdestillierten Lösungsmittel fällt als Gemisch an und muss wieder aufbereitet werden.

Weiterhin ergibt die -für die geforderte Reinigung nicht zu umgehende -diskontinuierliche Betriebsführung wegen der langen Verweilzeit im Sumpf der Kolonne eine hohe thermische Belastung des chlorierten Produktes.

Der Erfindung liegt daher die Aufgabe zugrunde, chlorierte Polymere im kontinuierlichen Betrieb bis zu einem praktisch beliebig kleinen Restgehalt von Chlorierungs-Lösungsmittel auf möglichst schonende Weise zu befreien, wobei der verfahrensmässige, energetische und/oder wirtschaftliche Aufwand so gering wie möglich sein soll.

Diese Aufgabe wird mit der Erfindung dadurch gelöst, dass die Chlorierungslösung am Kopf einer kontinuierlich arbeitenden Austauschkolonne eingegeben wird.

Bei dem neuen Verfahren findet der Lösungsmittelaustausch in den "Stufen" der Austauschkolonne zwischen abwärtsströmender, flüssiger Chlorierungslösung und dieser Lösung entgegenfliessendem, dampfförmigen zweitem Lösungsmittel statt. Da bei entsprechender Stufenzahl in der Kolonne ein vollständiger Lösungsmittelaustausch in einem "Durchgang" erreicht wird, kann das neue Verfahren im kontinuierlichen Betrieb arbeiten.

Der Lösungsmittelaustausch in der Kolonne kann dabei stufenweise in einer Kolonne mit einzelnen Böden oder kontinuierlich in einer Kolonne mit Packungskörpern erfolgen.

Der kontinuierliche Betrieb ergibt kurze Verweilzeiten des Produktes in der Kolonne; ein zusätzlicher Aufwand für die Trennung von als Kopfprodukt anfallenden Lösungsmittel-Mischungen entfällt ebenfalls.

Bei Vorhandensein von relativ grossen Chlor- und Chlorwasserstoffmengen in der Chlorierungslösung destillieren diese Verunreinigungen sofort mit dem Chlorierungs-Lösungsmittel über Kopf ab. Die Gefahr einer Reaktion mit dem zweiten Lösungsmittel ist kaum gegeben. Die Chlorierungslösung muss daher dei dem neuen Verfahren nicht ausdrücklich von Chlor und Chlorwasserstoff vorgereinigt werden. Die erzielbare Reinheit von Resten an Chlorierungs-Lösungsmittel im Produkt ist eine Frage des Aufwands, beispielsweise eine Frage der Anzahl der "Trennungsstufen" der Austauschkolonne.

Als zweites Lösungsmittel werden z.B. Ester, Ketone oder solche mit Aromaten-Struktur, wie z.B. Toluol oder Xylol mit Siedetemperaturen bei Atmosphärendruck von höchstens 180°C, die jedoch höher als das eingesetzte Chlorierungs-Lösungsmittel sieden, verwendet.

Besonders vorteilhaft sind Toluol und Xylol als zweite Lösungsmittel; denn bei Anwendung dieser Lösungsmittel bringt man keine neuen Komponenten in ein Anwendungssystem, da Toluol beispielsweise bei Druckfarben als Lösungsmittel dient, während Xylol vor allem in Anstrichsystemen im Schiff-, Stahl-oder Zementbau verwendet wird.

Eine besonders schonende Behandlung des chlorierten Polymer-Produktes erreicht man, wenn das zweite Lösungsmittel vor der Einspeisung in die Austauschkolonne in einem separaten Verdampfer verdampft wird.

Im folgenden wird die Erfindung anhand eines Beispiels näher beschrieben.

Fig. 1 zeigt schematisch den Aufbau einer Anlage zur Durchführung des Verfahrens.

Fig. 2 gibt eine Variante im Sumpf-Bereich der Anlage nach Fig. 1 wieder.

Das Kernstück der Anlage zur Durchführung des Verfahrens ist eine Dampf/Flüssigkeits-Austauschkolonne 1, die in bekannter Weise mit Einbauten 2 für den Stoffaustausch versehen ist. Diese Einbauten 2 können dabei für einen kontinuierlichen Lösungsmittelaustausch handelsübliche Packungs-oder Füllkörper sein, während bei stufenweiser Durchführung des Verfahrens die Einbauten 2 aus einzelnen Austauschböden bestehen.

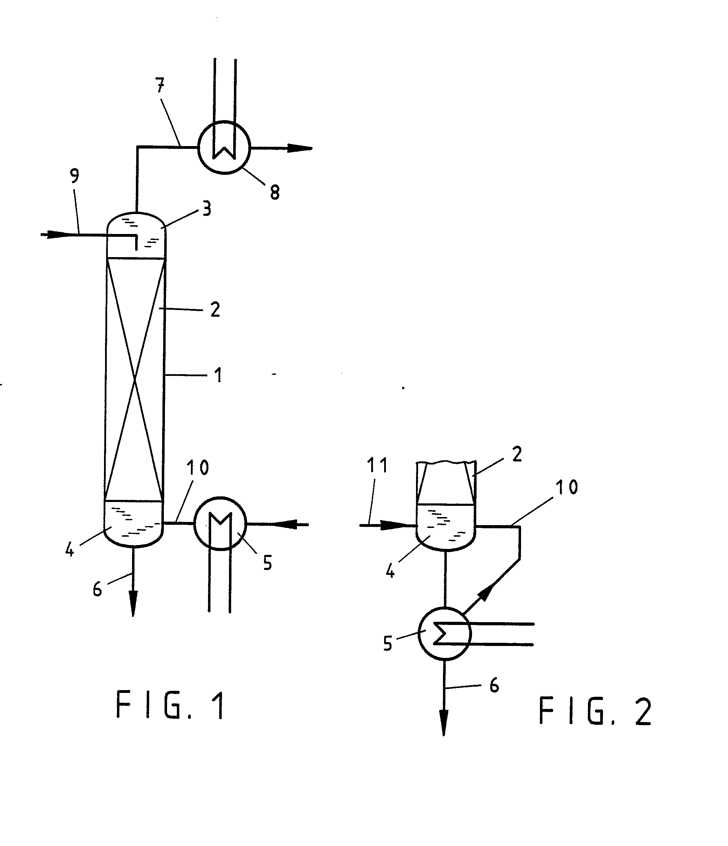

Bei der Anlage nach Fig. 1 erfolgt die Einspeisung der chlorierte Polymere, z.B. Chlorkautschuk enthaltenden Chlorierungs-Lösung, über eine Speiseleitung 9 in den Kopf 3 der Kolonne 1. Als von dem Polymer-Produkt zu trennendes Chlorierungs-Lösungsmittel ist Tetrachlormethan $CCl_4$ verwendet. Der durch die Einbauten 2 herabrieselnden Chlorierungs-Lösung strömit in der Kolonne 1 als zweites Lösungsmittel dampfförmiges Xylol oder Toluol entgegen, 'das in den Sumpf 4 der Kolonne 1 über eine Leitung 10 bereits dampfförmig eingegeben wird. Als Erzeuger für den Lösungsmittel-Dampf dient ein durch eine nicht dargestellte Wärmequelle beheizter Verdampfer 5; ein von der Kolonne 1 getrennter Verdampfer bringt den Vorteil, dass die Verdampfung von dem gelöstes Produkt enthaltenden Sumpf 4 vollständig getrennt ist, wodurch sich eine schonende Behandlung des nunmehr im zweiten Lösungsmittel gelösten Produktes ergibt, das über eine Leitung 6 aus der Kolonne abgezogen wird.

Die Isolierung des Produktes aus der abgezogenen Lösung kann, sofern erwünscht, nach einem der bekannten Verfahren, beispielsweise durch Eindampfen der Lösung und anschliessendem Trocknen des Produktes oder durch eine Wasserdampfbehandlung, erfolgen.

Das Kopfprodukt, das im wesentlichen aus Chlorierungs-Lösungsmittel und unter Umständen aus Chlor, Chlorwasserstoff oder Spuren von zweitem Lösungsmittel als Ver unreinigungen besteht, verlässt den Kopf 3 der Kolonne 1 über eine Leitung 7, die nach dem Kondensator eventuell zu einer nicht gezeigten Vakuumpumpe führt; durch diese wird der Kopfdruck der Kolonne 1 erzeugt und aufrechterhalten. Das in einem Kondensator 8 gewonnene Kondensat aus dem Kopfprodukt wird beispielsweise in den Chlorierungsprozess zurückgeführt.

Die sofortige Abtrennung der Chlorierungs-Lösungsmittel, bei der die korrosiven Verunreinigungen in das Kopfprodukt übergehen, bringt eine erhebliche Vereinfachung der benötigten Apparate, da ein grosser Teil von ihnen nicht mehr hochkorrosionsbeständig ausgebildet sein muss.

In Fig. 2 ist der Verdampfer 5, der z.B. ein Dünnschicht-Verdampfer ist, in der Abzugsleitung 6 für die Produktlösung angeordnet. Die Brüden aus diesem Verdampfer 5, die aus Dämpfen des zweiten Lösungsmittels bestehen, werden über Leitung 10 in den Kolonnensumpf 4 geleitet. Zusätzlich wird zweites Lösungsmittel über eine Leitung 11 in den Sumpf 4 eingegeben. Durch die Anordnung eines Verdampfers in dem Ablauf des im zweiten Lösungsmittel gelösten Produktes kann dessen Konzentration in der Lösung unabhängig von seiner Konzentration in der Chlorierungs-Lösung eingestellt werden.

Nunmehr sei ein Beispiel für einen Lösungsmittelaustausch nach der Erfindung beschrieben:

In den Kopf 3 einer Versuchskolonne 1, die einen Durchmesser von 70 mm und eine Höhe von 6 m hat und mit handelsüblichen Packungskörpern gefüllt ist, werden stündlich 40 kg Chlorkautschuk-Chlorierungs-Lösung mit Tetrachlormethan als Chlorierungs-Lösungsmittel eingespeist, wobei die Lösung als Verunreinigungen Chlor und Chlorwasserstoff enthalten kann. Der Chlorkautschuk-Anteil der Lösung beträgt 10 %. Durch die nicht dargestellte Vakuumpumpe wird der Kopfdruck der Kolonne auf etwa 0,3 bar absolut konstant gehalten.

Als zweites Lösungsmittel wird im Verdampfer 5 Xylol in einer Menge von etwa 21 kg/h verdampft und in den Sumpf 4 der Kolonne 1 eingeblasen. Die Leistung des Verdampfers wird dabei beispielsweise so geregelt, dass in der Mitte der Kolonne 1 eine Temperatur von etwa 65°C gehalten wird.

Aus dem Sumpf 4 können auf diese Weise stündlich etwa 25 kg Chlorkautschuk-Xylol-Lösung mit einem Polymergehalt -bezogen auf die abgezogene Lösungsmenge -von 16 % und einer Restverunreinigung von etwa 0,05 % $CCl_4$ gewonnen werden.

Als kondensiertes Kopfprodukt erhält man stündlich 36 kg $CCl_4$, das noch etwa 0,2 % Xylol enthält; zusätzlich sind in dem Kondensat als korrosive Verunreinigungen noch etwa 1 % Chlor und 0,8 % Chlorwasserstoff vorhanden.

Wie erwähnt, kann das Kondensat in die Chlorierungs-Anlage für das Polymer zurückgeführt werden, während die abgezogene Xylol-Lösung des Produktes auf eine bekannte Weise beispielsweise zu einem festen Produkt weiterverarbeitet oder nach Aufkonzentrierung direkt zur Herstellung von Anstrichsystemen eingesetzt werden kann.

**Ansprüche**

Verfahren zur Reinigung von chlorierten aliphatischen Polymeren von ihren Chlorierungs-Lösungsmitteln durch einen Lösungsmittelaustausch mit einem zweiten Lösungsmittel, das einen höheren Siedepunkt als das Chlorierungs-Lösungsmittel hat, wobei das zweite Lösungsmittel als Flüssigkeit oder Dampf in den Sumpf einer Kolonne eingespeist wird, aus dem darüberhinaus die Lösung der im zweiten Lösungsmittel gelösten chlorierten aliphatischen Polymeren adgezogen wird, während die Chlorierungs-Lösungsmittel und gegebenenfalls anderen Verunreinigungen am Kopf der Kolonne entfernt werden, dadurch gekennzeichnet, dass die Chlorierungslösung am Kopf (3) einer kontinuierlich arbeitenden Austauschkolonne - (1) eingegeben wird.

F I G. 1

F I G. 2